(19) Europäisches Patentamt
European Patent Office
Office européen des brevets

(11) **EP 4 729 979 A1**

(12) **EUROPEAN PATENT APPLICATION**

(43) Date of publication:
**22.04.2026 Bulletin 2026/17**

(21) Application number: **24207722.0**

(22) Date of filing: **21.10.2024**

(51) International Patent Classification (IPC):
*G01S 7/292* (2006.01)   *G01S 7/35* (2006.01)
*G01S 7/41* (2006.01)   *G01S 13/42* (2006.01)
*G01S 13/58* (2006.01)   *G01S 13/931* (2020.01)
*G01S 13/524* (2006.01)

(52) Cooperative Patent Classification (CPC):
**G01S 13/931; G01S 7/2922; G01S 7/2927;**
**G01S 7/354; G01S 7/414; G01S 13/42;**
**G01S 13/524; G01S 13/584**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Axis AB**
**223 69 Lund (SE)**

(72) Inventors:
• **Nadig, Santhosh**
**223 69 LUND (SE)**
• **Mannesson, Anders**
**223 69 LUND (SE)**

(74) Representative: **AWA Sweden AB**
**Matrosgatan 1**
**Box 5117**
**200 71 Malmö (SE)**

Remarks:
Amended claims in accordance with Rule 137(2)
EPC.

(54) **OBJECT DETECTION IN CLUTTERED RADAR DATA**

(57)     A method (100) of detecting objects in radar data, comprising:

obtaining (no) radar data from a radar measurement of a scene, wherein the radar data includes intensities pertaining to a plurality of points in a range-Doppler plane or a range-angle plane;

parametrizing (112) a one-dimensional subset of the range-Doppler plane or the range-angle plane, as the case may be, by one parameter;

extracting (113), from the radar data pertaining to the subset, intensities which are below a preconfigured clutter threshold;

regularizing (114) the extracted intensities as a function of the parameter to obtain a signal mask;

deriving (115) a detection threshold from the signal mask; and

performing object detection (116), wherein the detection threshold is applied to the radar data pertaining to the subset.

Fig. 1

EP 4 729 979 A1

**Description**

**TECHNICAL FIELD**

Within the general technical field of radar technology, the present disclosure relates to methods and devices for detecting objects in radar data which includes signal content representing clutter. In particular, it proposes methods and devices for object detection on the basis of range-Doppler data which is affected by radar clutter.

**BACKGROUND**

In radar technology, *clutter* (or radar clutter) is generally understood to include such targets which a radar device captures and displays but which are undesired because they reduce the probability of detecting the desired, actual targets. What concrete targets represent clutter differs between different radar devices and different use cases. For example, a dense cloud is of interest for a weather radar, but acts as clutter for a flight radar that monitors an aircraft passing through the cloud or behind it.

Clutter targets may be modeled as point-like scatterers or extended scatterers. In the captured radar data, the clutter targets in the second category may have a nonzero extent in the range dimension, the angle dimension and/or the Doppler dimension. Such clutter targets may be confined to a surface (surface clutter, such as waving grass, water puddles etc.), or they may be space-filling (volume clutter, such as free water droplets, dust particles etc.).

Threshold-based object detection, which is a widely practiced approach, includes a comparison of radar intensities for different data cells (e.g., range-Doppler bins) with a detection threshold. To perform object detection in a radar image where clutter is present, the occurrence of false positives can be limited by setting the detection threshold high enough, e.g., higher than the $90^{th}$ intensity percentile. This however also limits the ability to detect weak objects in the radar image.

Object detectors specialized for cluttered environments have been proposed in the literature and implemented in high-end equipment. These object detectors generally include highly sophisticated algorithms, which perform well but may also consume significant computational power. As a rule, such specialized object detectors cannot easily be implemented in power-constrained devices, such as battery-powered portable devices. It would be desirable to propose an alternative, computationally leaner solution to the problem of object detection in cluttered radar data.

**SUMMARY**

One objective of the present disclosure is to propose methods and devices for object detection in radar data affected by radar clutter. A particular objective is to make computationally lean methods and devices for this purpose available. A further objective is to propose such methods and devices which are suitable for battery-powered use cases. A further objective is to propose object detection methods and object detection devices which selectively apply, depending on the characteristics of the scene, a uniform or a nonuniform detection threshold. A further objective is to propose an object detection technique which is universally applicable to multiple formats of radar data, including at least range-Doppler data and range-angle data. A further objective is to propose object detection methods and object detection devices which are particularly adapted for certain known types of clutter. A still further objective is to enable object detection by selectively applying the novel technique proposed herein if significant clutter is present, and applying a state-of-the art approach otherwise.

At least some of these objectives are achieved by the invention as defined by the independent claims. The dependent claims relate to advantageous embodiment of the invention.

In a first aspect of the present disclosure, there is provided a method of detecting objects in radar data. The method comprises: obtaining radar data from a radar measurement of a scene, wherein the radar data includes intensities pertaining to a plurality of points in a range-Doppler plane or a range-angle plane; parametrizing a one-dimensional subset of the range-Doppler plane or the range-angle plane, as the case may be, by one parameter; extracting, from the radar data pertaining to the subset, intensities which are below a preconfigured clutter threshold C; regularizing the extracted intensities as a function of the parameter to obtain a signal mask; deriving a detection threshold from the signal mask; and performing object detection, wherein the detection threshold is applied to the radar data pertaining to the subset.

It is understood that the act of "parametrizing" the subset need not involve an active mathematical operation, but it may amount to noting that one of the basic variables, range, Doppler velocity and angle is suitable for use as the parameter. For example, the range variable may be a suitable parameter of a constant-Doppler subset of range-Doppler data, and the Doppler variable may be a suitable parameter of a constant-range subset. It is further understood that the "clutter threshold" has been configured in advance, such as by a user or a system owner, and that the clutter threshold is typically a globally applicable value, which is intended to be applied to a variety of scenes and/or for any time and date of executing the method. The clutter threshold may be based on an expectation or an estimate of an upper bound on typical clutter intensities that will be encountered in the scene or scenes to be measured. Further, a "detection threshold" denotes the reference value in threshold-based object detection, namely, the least intensity value that will be recognized as a likely object in the radar data.

In other words, the method according to the first aspect includes a novel combination of slicing the range-Doppler plane or the range-angle plane, as the case may be, into one or more one-dimensional subsets, fitting a regularized signal mask to radar data below the clutter threshold C, and using the signal mask as a basis for the detection threshold. As the inventors have realized, this enables one or more of the following advantages:

- The detection threshold is adapted to the actual radar data, i.e., to the actual measurement of the actual scene, and specifically to the radar data of each subset. The detection threshold is allowed to vary between subsets.

- The method allows using a nonuniform detection threshold, which has different heights for different parameter values.

- Because the signal mask is based only on such radar data that is below the clutter threshold C, the method suppresses the influence of more intense radar data, which typically originates from non-clutter targets.

- The regularization of the radar data below the clutter threshold C tends to eliminate noise and short-range artefacts, which are generally not relevant to consider within the object detection.

In a second aspect of the present disclosure, there is provided a signal processing device with processing circuitry configured to detect objects in radar data by performing the above method.

In a third aspect, this disclosure provides a computer program containing instructions for causing a computer, or the signal processing device in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

The second and third aspects of the present disclosure generally share the effects and advantages of the first aspect, and they can be implemented with a corresponding degree of technical variation.

In some embodiments of the object detection method and/or of the signal processing device, the detection threshold is derived from the signal mask by adding an offset $K$ to the signal mask, wherein the offset is constant with respect to the parameter. If multiple subsets are processed, one may apply a preconfigured offset value $K$ to all. Alternatively, one may use different offset values $K_1, K_2, ...$, and particularly different offset values $K_1, K_2, ...$ depending on a spatial characteristic of the subsets. For example, if the subsets correspond to increasing values of constant range (in the range-Doppler plane or the range-angle plane), one may use decreasing offset values in order to partially compensate the fact that faraway radar reflections are attenuated to a greater extent. A further option is to use an offset which is computed from the radar data of the subset under consideration.

The regularization of the extracted intensities below the clutter threshold C can be performed by any suitable method. In some embodiments, a smooth function of the parameter which parametrizes the subset is fitted to said extracted intensities. The smooth function may for example be a polynomial, such as a quadratic polynomial (degree 2 or less), a cubic polynomial (degree 3 or less) or more generally a combination of quadratic polynomial patches. The smooth function may further be a combination of cubic polynomial patches (spline fit). In other embodiments, the regularization acts on the extracted intensities; this type of regularization may include a smoothing operation, such as convolving with a convolution kernel of nonzero support or with a convolution matrix.

In some embodiments, the object detection includes an estimation of a noise floor on the basis of the radar data and using a conventional method. The noise floor is then compared with the signal mask. If the noise floor substantially coincides with the signal mask, it is concluded that the radar data is substantially free from clutter, so that a simpler object-detection method can be applied. For example, the detection threshold can be computed based on the noise floor, and the signal mask is disregarded henceforth. This may, in the end, benefit the quality of the object detection thanks to the availability of highly accurate noise-floor estimation methods (noise statistics) in the literature. Accordingly, these embodiments selectively apply the novel object detection technique proposed herein if significant clutter is present, while applying a state-of-the art approach otherwise.

In some embodiments, object detection is performed for multiple one-dimensional subsets of the range-Doppler plane or the range-angle plane, as the case may be, and using respective detection thresholds. By combining outputs for two or more subsets, more complete knowledge of the objects present in the scene can be obtained. Alternatively or additionally, if outputs for subsets which are adjacent, intersecting or overlapping are combined, the reliability of the object detection may be further increased. For example, if two or more coinciding or nearby detections are found in different subsets, this indicates a higher likelihood of an object being present. Further alternatively, the global object detection includes using a global detection threshold obtained by combining detection thresholds from two or more subsets, e.g., by fitting a smooth function to the detection thresholds from all of the subsets. The object detections are then performed as a joint operation, in which the global object detection uses the global detection threshold.

With reference to radar data in the range-Doppler plane, some embodiments relate to the case where the one-dimensional subset is a range slice (constant range) parameterized by Doppler velocity. In this situation, the signal mask may be determined by an operation which prefers an even function, e.g., an operation which tries to fit the extracted intensities to a smooth even function (to be used as the signal mask), or an operation which has a higher likelihood of selecting an even function as the signal mask if multiple smooth functions agree with the extracted intensities to an equivalent degree. To achieve this preference, for example, the signal mask may be determined based on an even ansatz, such as a cosine series or a sum of a finite number of cosines. In particular, the signal mask may be determined with a preference for an even function centered at or near zero Doppler velocity, which the inventors have observed is generally true for clutter reflections. In the particular cases of waving grass or other plants, the instantaneous velocities clearly have an expected value of zero. Except for conditions with strong (radial) wind, rain droplets tend to move at low horizontal velocity. Stationary clutter targets, such as reflecting water puddles or suspended reflecting particles in nonmoving air, are of course inherently at rest.

With reference to radar data in the range-angle plane, some embodiments relate to the case where the one-dimensional subset is a range slice (constant range) parameterized by angle of arrival. When determining the signal mask with reference to this parameterization, it is easy to take into account heuristics which apply to known sources of clutter. For instance, raindrops may be expected to contribute omnidirectional (isotropic) clutter, possibly a field of windswept grass may occupy a lower half of the field of view, whereas the foliage of a tree is usually confined to a bounded angular interval.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order presented, unless this is explicitly stated.

## BRIEF DESCRIPTION OF THE DRAWINGS

Aspects and embodiments are now described, by way of example, with reference to the accompanying drawings, on which:

figure 1 is a flowchart of a method of detecting objects in radar data, according to embodiments herein;

figure 2 depicts a scene monitored by radar equipment and a signal processing device configured to perform object detection in the resulting radar data;

figure 3 illustrates a clutter detection threshold in terms of intensity, which has been drawn as a function of Doppler velocity $D$ and range $r$;

figure 4 illustrates a signal mask and a detection threshold, which are drawn as functions of Doppler velocity $D$ for constant range;

figures 5A, 5B and 5C illustrate different combinations of one-dimensional subsets of the range-Doppler $(r, D)$ plane or the range-angle $(r, \theta)$ plane;

figure 6 illustrates a clutter detection threshold in terms of intensity, which has been drawn as a function of angle of arrival $\theta$ and range $r$; and

figure 7 illustrates a signal mask and a detection threshold, which are drawn as functions of angle of arrival $\theta$ for constant range.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

**Detecting objects in range-Doppler data**

For the purpose of detecting objects in cluttered radar data, the inventors have conceived a method 100 which is universally applicable to radar data in the range-Doppler plane and the range-angle plane. To convey the full generality of the inventors' contribution, while being able to provide detailed instructions for putting it into practice, the novel object-detection method will be described once for the range-Doppler case and once for the range-angle case.

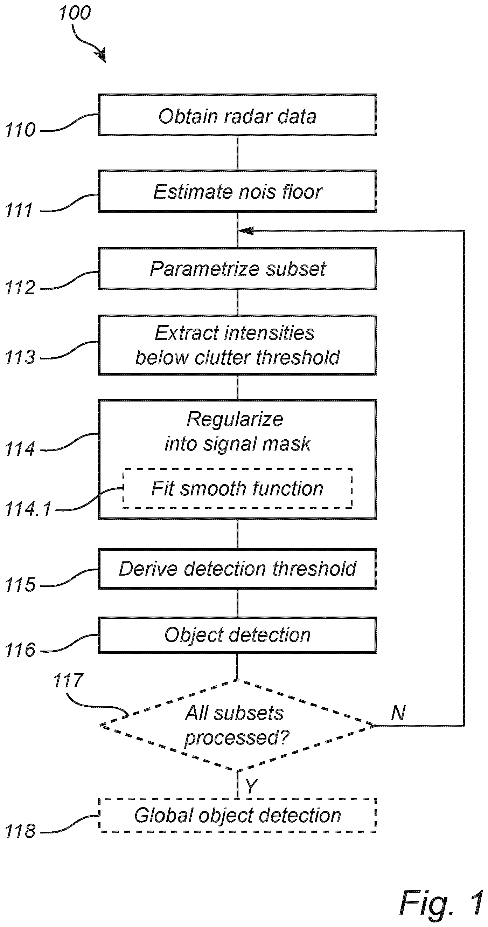

With reference to the flowchart in figure 1, some embodiments of the method 100 will be described. The method 100 takes as input range-Doppler radar data, which originate from a radar measurement, wherein the radar measurement has been performed by the same entity as is executing the method 100 or by a different entity. The entity executing the method 100 is not required to have radar equipment at its disposal, but radar data is sufficient; hence, the entity executing the method 100 may be simply a general-purpose processor with generic data input and data output capabilities.

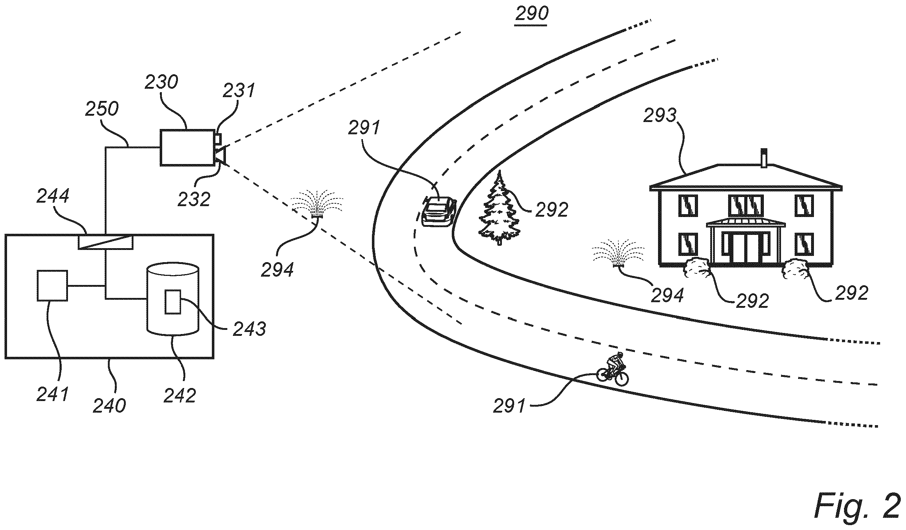

A possible application of the method 100 is in target detection or target following, notably in such conditions where radar clutter may be expected to be present. To illustrate, figure 2 shows an example scene 290, and radar equipment 230 arranged to monitor the scene 290. The scene 290 is located in a built environment, where vehicles 291, vegetation 292, a building 293 and garden sprinklers 294 are present. It is assumed that the vehicles 291 and building 293 constitute intended radar targets, which are of interest to an owner or operator of the radar equipment 230, whereas the vegetation 292 and the water droplets from the sprinklers 294 give rise to undesired radar reflections which clutter the radar data. (In some use cases, also static objects like the building 293 may be considered unintended radar targets.) An aim with the object detection method 100 to be described is to avoid reporting the reflections off the vegetation and the water droplets as positives, in which case they would be false positives.

As is well known to those skilled in the art, the radar equipment 230 comprises a radar transmitter 231 and a radar receiver 232. The radar transmitter 231 is configured to transmit an outgoing radio-frequency (RF) beam towards the scene 290, the radar receiver 232 is configured to receive an incoming RF beam which is a reflection (back-scatter) of the outgoing RF beam off an object in the scene 290. The radar equipment 230 maybe a frequency-modulated continuous-wave (FMCW) radar equipment. Although not shown in figure 2, it is understood that the radar equipment 230 may further include drive circuitry and control circuitry. The teachings of the present disclosure are not limited to single-transmitter single-receiver radar equipment, but they may additionally be applied to radar equipment including multiple physical transmitters and/or multiple physical receivers. Such radar equipment may be operated according to a repeating transmission sequence or another configured transmission schedule. In particular, the radar equipment may be operated according to a multiple-input multiple-output (MIMO) approach, such as a time-division multiplexing (TDM) MIMO approach.

In the setup depicted in figure 2, the radar equipment 230 shares its data, over a wired or wireless data connection 250, with a signal processing device 240 configured to perform object detection. To implement the present invention, nothing more than a unidirectional data connection 250 (towards the signal processing device 240) is necessary. The signal processing device 240 may comprise processing circuitry 241, a memory 242 suitable for storing computer programs 243, a data interface towards the radar equipment 230, as well as internal communication lines (data buses and the like). The processing circuitry 241 may for example be general-purpose (programmable) circuitry with one or more processing cores, an application-specific integrated circuit (ASIC), a field-programmable gate array (FPGA) or a system-on-chip. It is recalled that a radar signal processing chain may include the following sequence of functional stages, starting from the antenna side: mixing, analog-to-digital conversion, radio-frequency frontend processing on the basis of an intermediate frequency (IF) signal, and possibly digital beamforming. Different processing chains may integrate these stages to different degrees. As such, a signal processing device 240 performing the method 100 may be adapted for deployment as a general-purpose radar baseband processor, as a combined frontend and beamforming device, or as a dedicated digital beamforming device.

In a first step 110 of the method 100, radar data from a radar measurement of the scene 290 is obtained. The radar data includes intensities pertaining to a plurality of points in a range-Doppler plane. Each intensity value may correspond to a combination of a range bin and a Doppler bin (collectively: a range-Doppler bin), or it may correspond to a range-Doppler value pair representing a center of the observations that contributed to this intensity value. The intensity refers to the magnitude of the incoming RF, which travels from a target in the scene 290 to the radar receiver 232.

For purposes of the mathematical description of step 110, it will be assumed for simplicity that the radar equipment 230 is a single-input single-output device, where the radar transmitter 231 emits six chirps $c0, c1, ..., c5$. A chirp length $T_c$ and a chirp repetition time $T_r$ apply. The chirps are reflected off targets in the scene 290 and measured by the radar receiver 232 as IF intensity values sampled at discrete points $t0, t1, ..., t7$ in the time interval $[0, T_c]$. (In realistic implementations, the discretization may be finer, and the computations may be based on data from a larger number of chirps. Using common general knowledge and/or consulting textbooks and other reference sources, those skilled in the art can generalize the following mathematical expressions to suit real use cases, and they can also derive corresponding expressions which apply to a multiple-input and/or multiple-output radar.) The sampled IF intensity values may be written in matrix form as follows:

$$x = \begin{bmatrix} x^{c0,t0} & x^{c0,t1} & x^{c0,t2} & x^{c0,t3} & x^{c0,t4} & x^{c0,t5} & x^{c0,t6} & x^{c0,t7} \\ x^{c1,t0} & x^{c1,t1} & \cdots & & & & & \vdots \\ x^{c2,t0} & \vdots & & & & & & \\ x^{c3,t0} & & & & & & & \\ x^{c4,t0} & & & & & & & \\ x^{c5,t0} & \cdots & & & & & & x^{c5,t7} \end{bmatrix} \qquad (1)$$

Each row of x corresponds to one of the chirps, and each entry can be understood as a time sample for that chirp. Range information can be obtained by applying a discrete harmonic transform, for example DFT or FFT, to each row of the IF signal. If FFT is used, this produces the following range spectrum (a "range FFT"):

$$y = \begin{bmatrix} y^{c0,r0} & y^{c0,r1} & y^{c0,r2} & y^{c0,r3} & y^{c0,r4} & y^{c0,r5} & y^{c0,r6} & y^{c0,r7} \\ y^{c1,r0} & y^{c1,r1} & \cdots & & & & & \vdots \\ y^{c2,r0} & \vdots & & & & & & \\ y^{c3,r0} & & & & & & & \\ y^{c4,r0} & & & & & & & \\ y^{c5,r0} & \cdots & & & & & & y^{c5,r7} \end{bmatrix} \qquad (2)$$

The row dimension of this matrix now corresponds to range, wherein $r0, r1, ..., r7$ may be interpreted as range bins, intervals on the radial distance to the reflecting object. The column dimension still corresponds to the six chirps $c0, c1, ..., c5$, and all information in the matrix has been derived from measurement data read from the leftmost virtual array element in figure 1B. By applying a further FFT to each column of $y$, a range-Doppler spectrum (or "Doppler FFT") is obtained:

$$z = \begin{bmatrix} z^{v0,r0} & z^{v0,r1} & z^{v0,r2} & z^{v0,r3} & z^{v0,r4} & z^{v0,r5} & z^{v0,r6} & z^{v0,r7} \\ z^{v1,r0} & z^{v1,r1} & \cdots & & & & & \vdots \\ z^{v2,r0} & \vdots & & & & & & \\ z^{v3,r0} & & & & & & & \\ z^{v4,r0} & & & & & & & \\ z^{v5,r0} & \cdots & & & & & & z^{v5,r7} \end{bmatrix} \qquad (3)$$

Each entry in the matrix $z$, generally a complex number, may be understood as an element in a discrete representation of the range-Doppler spectrum. A superscript such as $v_i, r_j$ shall be understood as referring to the $i^{th}$ velocity (or Doppler) bin and the $j^{th}$ range bin or, for short, the $(i, j)^{th}$ range-Doppler bin. It is noted that the velocity is a signed quantity, in the sense that the range-Doppler spectrum allows movement radially towards the radar to be distinguished from movement radially away from it.

In fact, specialized hardware (e.g., chipsets, optionally integrated in the TDM MIMO radar equipment) for computing the range-Doppler spectrum exists, which enable the obtaining of radar data in range-Doppler format without necessarily executing the computations outlined above. Because such hardware and corresponding algorithm libraries are available to an implementer of the method 100, the step 110 of obtaining the radar data in the method 100 should be considered completed as soon as the data according to equation (3) is available.

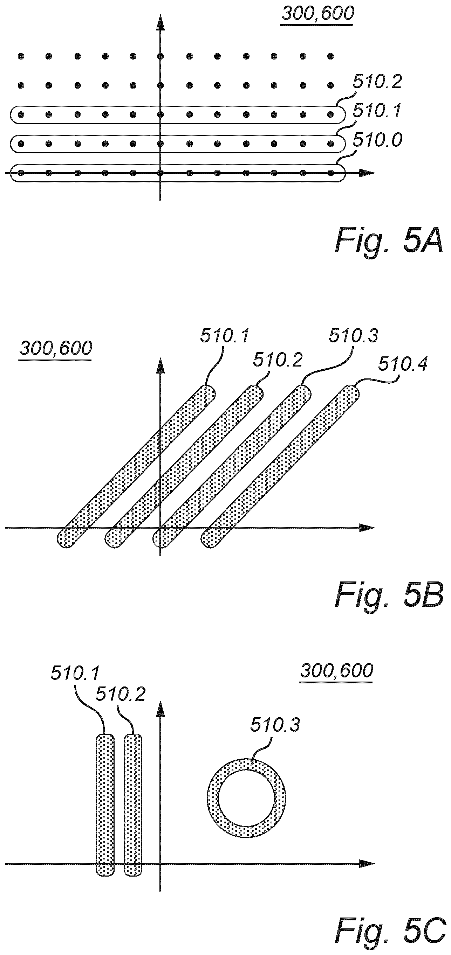

In a next step 112 of the method 100, a one-dimensional subset of the range-Doppler plane is parameterized by one parameter. Example subsets 510 are illustrated in figures 5A, 5B and 5C, where the horizontal axis represents doppler velocity $D$ and the vertical axis represents range $r$.

In figure 5A, where discrete range-Doppler points are explicitly indicated, the subsets 510 corresponds to a constant values of range: $\{(r, D): r = r_0\}$, $\{(r, D): r = r_1\}$, $\{(r, D): r = r_2\}$ and so forth. Each subset can be parametrized by the velocity $D$, a rescaled velocity $\gamma D$, where $\gamma \neq 0$, or more generally by any nondecreasing continuous function of the velocity $D$.

In figure 5B, the subsets correspond to lines in the range-Doppler plane, on the form $\{(r, D): ar - bD = c\}$, where $a, b > 0$ are constant and $c$ has different values for different individual subsets. Each such subset may be parametrized by a real parameter $t$, as per $\left\{(r, D) = \left(t, \frac{t-c}{b}\right) : t \in \mathbb{R}\right\}$ or $\left\{(r, D) = \left(-at, -\frac{at+c}{b}\right) : t \in \mathbb{R}\right\}$ or any equivalent form. Although not explicitly indicated in figure 5B, the range-Doppler data may be discrete in the sense that the radar data only has intensity values for pairs of integer $(r, D)$ values (or some other discretization of the range-Doppler plane). In this case, the radar data pertaining to a subset may effectively correspond to the integer points the subset intersects.

In the range-Doppler plane shown in figure 5C, there are two one-dimensional subsets 510.1, 510.2 corresponding to constant values of velocity, such as $\{(r, D): D = D_1\}$ and $\{(r, D): D = D_2\}$. Figure 5C further shows a one-dimensional annular subset, which can be parametrized by a parameter representing an angle, such as $t \in [0, 2\pi)$.

In general terms, the act of parameterizing 112 a subset includes identifying a suitable parameter $t$ in such manner that the points of the subset can be traversed by varying the parameter. Then, each point corresponds to a value of the parameter. The parameter $t$ may be a scalar parameter which takes values in the real numbers or a subinterval thereof. As suggested by the example above, a given parametrization is nonunique in the sense that it can be replaced with a shifted or rescaled version.

In a following step 113 of the method 100, intensities which are below a preconfigured clutter threshold $C$ are extracted from the radar data pertaining to the subset. The extracted intensity values will be processed further in the subsequent step. The configuring of the clutter threshold does not belong to the present method 100 as such. Instead, the clutter threshold may have been configured in advance, e.g., by a user or a system owner. The clutter threshold $C$ is typically a globally applicable value, which is intended to be applied to a variety of scenes and/or for any time and date of executing the method. The clutter threshold $C$ may be based on an expectation or an estimate of an upper bound on typical clutter intensities that will be encountered in the scene or scenes to be measured.

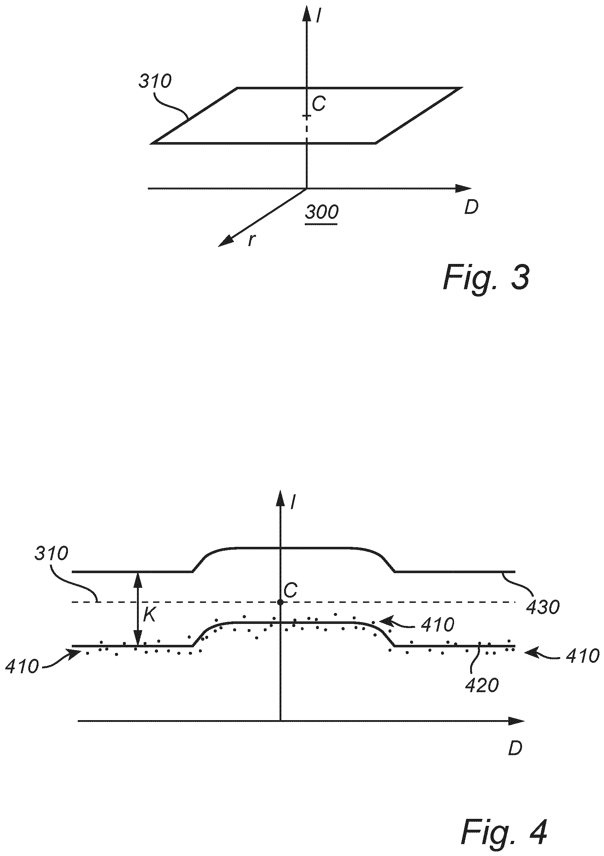

Figure 3 shows an example clutter threshold 310, defined by $I = C$, in the range-Doppler plane 300. Figure 4 shows the location of an example clutter threshold 310 in a subset of the range-Doppler plane.

Next, in a step 114, the extracted intensities are processed as samples of an (unknown) function of the subset's parameter. By applying a regularization operation, a signal mask is obtained. The regularization operation may include fitting 114.1 a smooth function of the parameter to the extracted intensities. A smooth function in this sense may be a continuous function of the parameter, in particular a function of the parameter which is piecewise continuously differentiable. The smooth function may for example be a polynomial, such as a quadratic polynomial (degree 2 or less), a cubic polynomial (degree 3 or less) or more generally a combination of quadratic or cubic polynomial patches. In other embodiments, as an alternative to the function-fitting operation 114.1, the regularization operation acts directly on the extracted intensity values and transforms them into intensity values which are more regular with respect to the parameter. A direct regularization operation could include smoothing by convolving with a convolution kernel of nonzero support (e.g., a gaussian kernel, or a kernel with compact support) or by convolving discretely with a convolution vector.

In some embodiments, where the one-dimensional subset of the range-Doppler plane is a range slice (constant range) parameterized by Doppler velocity, the signal mask 420 may be determined by a regularization operation 114 which prefers an even function, e.g. a function which is symmetric relative to the origin or to another input value. For example, the signal mask 420 may be determined based on an even ansatz (e.g., cosine series on an interval, or a sum of a finite number of cosines on an interval), wherein the ansatz is fitted 114.1 to the extracted intensity values 410 by determining one or more shape parameters of the ansatz (e.g., cosine coefficients). In particular, the signal mask 420 may be determined with a preference for an even function centered at or near zero Doppler velocity, knowing that clutter reflections are oftentimes so centered. In the particular examples of outdoor plants waving in the wind and wave crests on a water surface, the instantaneous velocities have an expected value of zero. Stationary clutter targets are clearly at rest relative to a stationary radar receiver 232. Rain droplets tend to move at low horizontal velocity unless they experience strong wind, optionally, if a (radial) windspeed is known, one may determine the signal mask 420 from an ansatz which is centered at a Doppler velocity corresponding to this windspeed. The method 100 according to these embodiments are particularly well adapted for the mentioned types of clutter targets.

Figure 4, where the horizontal axis represents velocity $D$ and the vertical axis represents intensity $I$, illustrates an example appearance of the radar data after the extraction operation in step 113. The non-extracted radar data is not shown in figure 4. The subset under consideration represents constant range, and it may be parameterized by velocity $D$. None of the extracted intensity values 410 exceeds the clutter threshold $C$. The signal mask 420 has been obtained by regularizing the extracted intensity values 410, and it may therefore be said to be a smooth approximation of the extracted intensity values 410. The signal mask 420 may be patched together from quadratic polynomials or cubic polynomials, e.g., at the two junction points between the flat tails and the elevated central portion, at which the first derivative of the signal mask 420 is discontinuous.

Resuming the description of the method 100, the execution flow goes on to a step 115 of deriving a detection threshold 430 from the signal mask 420. The detection threshold 430 is to be used for detecting objects in the range-Doppler data pertaining to that subset 510. More precisely, the intensity of a range-Doppler bin is compared with the detection threshold, and if the intensity exceeds the detection threshold, it is considered likely that a target located at that range and moving that Doppler velocity is present in the scene 290. The detection threshold 430 is derived from the signal mask 420 in the sense that the detection threshold 430 inherits some characteristics of the signal mask 420, such as its waveform or other features which likely represent a cluttered region of the subset. Unlike the clutter threshold C, the detection threshold 430 is in general not constant, i.e., it is nonuniform with respect to the parameter of the subset. When no clutter is present, the signal mask 420 may correspond approximately to a noise floor, which is substantially uniform with respect to said parameter.

An example of a feature representing a cluttered region is the elevated central portion of the signal mask 420 seen in figure 4; a copy of this elevated portion (possibly after translation and/or rescaling) should preferably be present in the detection threshold 430 as well. The portions (tails) outside the feature representing clutter are not necessarily inherited by the detection threshold 430, but they may be replaced with a preconfigured detection threshold value.

To derive the detection threshold 430 from the signal mask 420 while realizing these aims, one may add an offset $K$ to the signal mask 420, as seen in figure 4, wherein the offset is constant with respect to the parameter $D$. If multiple subsets 510 are processed within an execution of the method 100 - as will be discussed in greater detail below - one may apply a preconfigured offset value K to all. Alternatively, one may use different offset values $K_1$, $K_2$,..., and particularly different offset values $K_1$, $K_2$, ... depending on a spatial characteristic of the subsets 510. For example, if the subsets correspond to increasing values of constant range $r_1 < r_2 < r_3 < \cdots$ (each subset parameterized by Doppler velocity), one may use decreasing offset values, $K_1 > K_2 > K_3 > \cdots$ in order to partially compensate the fact that faraway radar reflections are attenuated to a greater extent due to the longer propagation distance. A further option is to use an offset which is computed based on the noisiness of the radar data of the subset under consideration. Preferably, the offset is positively correlated with the noise level of the radar data.

Using a constant clutter threshold $C$ together with an offset whose values $K_1$, $K_2$, ... vary with a spatial characteristic of the subsets 510 will produce a detection threshold which has a variation with respect to the same spatial characteristic. A detection threshold with an equivalent variation can be achieved by using a constant offset $K$ together with a clutter threshold whose values $C_1$, $C_2$, ... vary with the same spatial characteristic of the subsets 510. Similarly, a desired dependence on noisiness can be introduced via the clutter threshold or via the offset.

The execution flow of the method 100 can then proceed to a step 116 of object detection. The object detection is threshold-based, wherein the detection threshold 430 derived in step 115 is applied to the radar data pertaining to the subset 510 under consideration. Thanks to the specific, data-adaptive properties of the detection threshold 430 - as described above - the object detection 116 has a low probability of reporting clutter data as objects.

The detection threshold 430 may be applied to all radar data (i.e., all intensity values) pertaining to the subset 510. Alternatively, to reduce the number of comparisons and the number of memory operations, some radar data is excluded from the object detection on the basis of certain heuristics or shortcuts. For example, if the detection threshold 430 is computed by adding a constant positive offset to the signal mask 420, all the intensities extracted in step 113 are significantly smaller than the detection threshold 430, and it may be considered unlikely that any of these will lead to a positive object detection. The object detection may therefore conveniently be restricted to the complement of the extracted intensities.

In some embodiments, the execution of the method 100 may end after completion of the object detection 116. The output of the object detection 116 may be presented by means of a user interface.

In other embodiments, as suggested by the decision point 117, the steps of parameterization 112, extraction 113, regularization 114, threshold derivation 115 and object detection 116 are repeated (N branch from decision point 117) for at least one further one-dimensional subset 510 of the range-Doppler plane.

In a step 118 of global object detection, the outputs for two or more subsets can then be combined so as to reach more complete knowledge of the objects present in the scene 290.

Alternatively or additionally, if outputs for subsets which are adjacent, intersecting or overlapping are combined, the reliability of the object detection may be further increased. For example, if two or more coinciding or nearby detections are found in different subsets, this indicates a higher likelihood of an object being present than if only a single detection is found. In accordance herewith, the output of the object detection may optionally be presented together with indications of the relative likelihood (reliability) of each detected object.

Further alternatively or additionally, the global object detection 118 includes using a global detection threshold obtained by combining detection thresholds 430 from two or more subsets 510. The global detection threshold can be determined by fitting a smooth function of two variables, range $r$ and Doppler $D$, to the detection thresholds 430 from two or more subsets 510. (This may equivalently be achieved by fitting a smooth function of range r and Doppler $D$ to the signal masks 420 from the two or more subsets, and then deriving a global detection threshold from that smooth function.) The object detection step 116 for the two or more subsets 510 are then performed jointly and using the global detection threshold, i.e., the global detection threshold is applied to the intensity values throughout the range-Doppler plane rather than applying it to the subsets thereof.

In some embodiments, regardless of whether one or multiple subsets 510 are processed, the method 100 may further comprise a step 111 of estimating a noise floor on the basis of the radar data. Highly accurate noise-floor estimation methods are known in the art. With the noise floor available, the deriving 115 of the detection threshold 430 includes a preliminary substep of assessing whether the noise floor substantially coincides with the signal mask 420; if this is true, the detection threshold 430 is computed based on the noise floor instead of the signal mask 420. As noted above, when no clutter is present, the signal mask 420 may correspond approximately to a noise floor according to conventional technology. The use of a flat detection threshold 430 may simplify the object detection 116. In implementations, the noise floor may be estimated 111 using a conventional method, such as setting the noise floor equal to the median intensity or an $n^{\text{th}}$ intensity percentile, where $30 \leq n \leq 70$.

## Detecting objects in range-angle data

There will now be described an embodiment of the method 100, which takes as input radar data that includes intensities pertaining to a plurality of points in the range-angle plane, where the coordinate axes are range $r$ and angle of arrival (AoA) $\theta$.

It will be assumed that the radar equipment 230 is configured to resolve features with respect to AoA, in particular by including a radar array. A radar array may consist of a single physical transmitter and a plurality of physical receivers, or it may have a plurality of physical transmitters and a single physical receiver. The effective number of elements in the physical radar array is equal to the number of physical receivers. A MIMO (multiple-input multiple-output) radar array has multiple physical receivers as well as $M \geq 2$ physical transmitters, and this gives rise to a virtual radar array with $M_r M$ elements, where $M_r$ is the number of physical receivers. The physical transmitters in a MIMO radar array may be fed in synchroneity using a multi-carrier signal, or the physical transmitters are used in alternation (TDM MIMO). Although the present embodiment of the method 100 is not limited to any of the outlined radar configurations, the mathematical description will relate to a simple example where the radar transmitter 231 has a single physical transmitter ($M = 1$) and the radar receiver 232 has eight physical receivers RX1, RX2, ..., RX8 ($M_r = 8$).

In step 110, radar data in the form of intensities pertaining to a plurality of points in a range-angle plane 600 are obtained. The underlying calculations may be along the lines of one of the following approaches. Of the quantities $x$, $y$, $z$ discussed above under step 110, there is one copy for each physical receiver. This includes eight sets of sampled IF intensity values:

$$x_{RX1}, x_{RX2}, x_{RX3}, x_{RX4}, x_{RX5}, x_{RX6}, x_{RX7}, x_{RX8},$$

eight range spectra:

$$y_{RX1}, y_{RX2}, y_{RX3}, y_{RX4}, y_{RX5}, y_{RX6}, y_{RX7}, y_{RX8},$$

and eight range-Doppler spectra:

$$z_{RX1}, z_{RX2}, z_{RX3}, z_{RX4}, z_{RX5}, z_{RX6}, z_{RX7}, z_{RX8}.$$

To illustrate, the range-Doppler spectrum for the first physical receiver RX1 may have this appearance:

$$z_{RX1} = \begin{bmatrix} z_{RX1}^{v0,r0} & z_{RX1}^{v0,r1} & z_{RX1}^{v0,r2} & z_{RX1}^{v0,r3} & z_{RX1}^{v0,r4} & z_{RX1}^{v0,r5} & z_{RX1}^{v0,r6} & z_{RX1}^{v0,r7} \\ z_{RX1}^{v1,r0} & z_{RX1}^{v1,t1} & \cdots & & & & & \vdots \\ z_{RX1}^{v2,r0} & \vdots & & & & & & \\ z_{RX1}^{v3,r0} & & & & & & & \\ z_{RX1}^{v4,r0} & & & & & & & \\ z_{RX1}^{v5,r0} & \cdots & & & & & & z_{RX1}^{v5,r7} \end{bmatrix}$$

According to the first approach, to compute a range-angle spectrum for objects traveling at radial velocity $v = v_i$, one collects the $(i, 0)^{\text{th}}$ range-Doppler bin from all the spectra $z_{RX1}$, $z_{RX2}$, ... , $z_{RX8}$ and form an array signal:

$$Z^{(i,0)} = \begin{bmatrix} z_{RX1}^{vi,r0} & z_{RX2}^{vi,r0} & z_{RX3}^{vi,r0} & z_{RX4}^{vi,r0} & z_{RX5}^{vi,r0} & z_{RX6}^{vi,r0} & z_{RX7}^{vi,r0} & z_{RX8}^{vi,r0} \end{bmatrix}.$$

The phase shift between the elements is given as a sum of the velocity-induced phase shift and an AoA-induced phase shift. The AoA-induced phase shift can be observed when the AoA is nonzero in the plane of the receiver array, as a result of path differences between the physical receivers.

In preparation of an AoA estimation, the velocity-induced phase shift is eliminated by a phase compensation method, whereby a compensated array signal is obtained:

$$\tilde{Z}^{(i,0)} = \begin{bmatrix} \tilde{z}_{RX1}^{vi,r0} & \tilde{z}_{RX2}^{vi,r0} & \tilde{z}_{RX3}^{vi,r0} & \tilde{z}_{RX4}^{vi,r0} & \tilde{z}_{RX5}^{vi,r0} & \tilde{z}_{RX6}^{vi,r0} & \tilde{z}_{RX7}^{vi,r0} & \tilde{z}_{RX8}^{vi,r0} \end{bmatrix}$$

The phase compensation method may be any per se known phase compensation method from the literature. For example, the phase compensation method described in the patent publication US10627483B2 may be applied. The Doppler phase $\varphi_d = 4\pi T_r v f_c/c$ used in this method is computed from $v = v_i$, the chirp repetition time $T_r$ and a carrier frequency $f_c$ of the RF beam transmitted towards the scene 290. The phase difference between two elements of the compensated array signal $\tilde{Z}^{(i,0)}$ corresponds to the AoA-induced phase shift $\omega$, which is related to the AoA $\theta$ through

$$\sin \theta = \frac{\lambda \omega}{2\pi d}$$

where d is the spatial separation of the elements. Applying an FFT operation to the compensated array signal $\tilde{Z}^{(i,0)}$ yields intensity as a function of angle for $(v, r) = (v_i, r_0)$. Repeating these computations for array signals $Z^{(i,1)}$, $Z^{(i,2)}$, ..., $Z^{(i,7)}$, corresponding to the further range values $r_1, r_2, ... r_7$, yields a complete range-angle image. The intensities which make up the range-angle image may be referred to as range-angle bins. This is the data received in step 110 of the method 100.

According to the second approach, the range-angle spectrum for objects traveling at any radial velocity is computed from the range FFT. From the range spectra of the different receivers, $y_{RX1}$, $y_{RX2}$, $y_{RX3}$, $y_{RX4}$, $y_{RX5}$, $y_{RX6}$, $y_{RX7}$, $y_{RX8}$, the following array vector is formed from elements corresponding to the same chirp (here: c0) and same range (here: $r = r_0$):

$$Y^{(0,0)} = \begin{bmatrix} y_{RX1}^{c0,r0} & y_{RX2}^{c0,r0} & y_{RX3}^{c0,r0} & y_{RX4}^{c0,r0} & y_{RX5}^{c0,r0} & y_{RX6}^{c0,r0} & y_{RX7}^{c0,r0} & y_{RX8}^{c0,r0} \end{bmatrix}.$$

Applying an FFT operation to the array vector $Y^{(0,j)}$ yields intensity as a function of angle for $r = r_0$. Repeating these computations for array signals $Y^{(0,1)}$, $Y^{(0,2)}$, ... $Y^{(0,7)}$, corresponding to the further range values $r_1, r_2, ... r_7$ and the same chirp c0, yields a complete range-angle image.

In step 112 of the method 100, a one-dimensional subset of the range-angle plane 600 is parameterized by one parameter. This step may be carried out exactly as in the range-Doppler plane, according to the above description which need not be repeated here. Equally relevant are the example subsets 510 illustrated in figures 5A, 5B and 5C, where the horizontal axis represents doppler velocity $D$ and the vertical axis now represents AoA $\theta$.

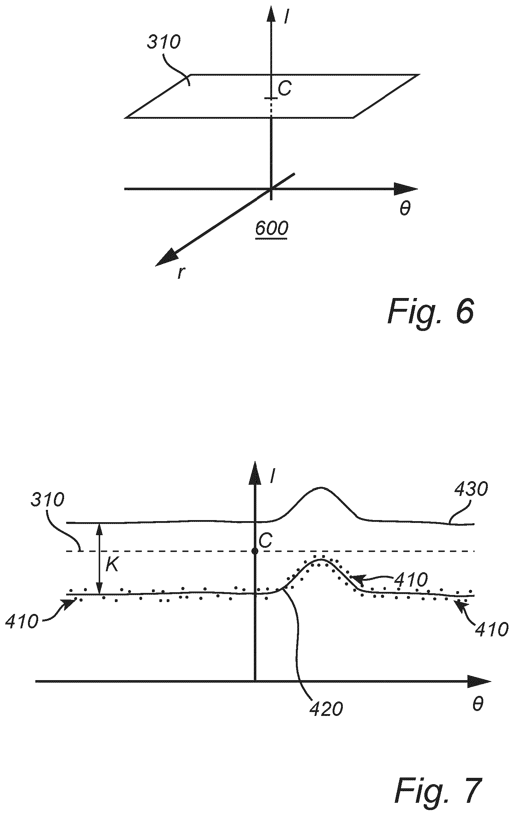

In the next step 113, intensities 410 which are below a preconfigured clutter threshold $C$ are extracted from the radar data pertaining to the subset. Figure 6 shows an example clutter threshold 310, defined by $I = C$, in the range-angle plane 600. Figure 7 shows the location of an example clutter threshold 310 in a subset of the range-angle plane 600.

In the next step 114, the extracted intensities 410 are processed as samples of a function of the subset's parameter. By applying a regularization operation, a signal mask 420 is obtained. The process is illustrated by figure 7, where the horizontal axis represents AoA $\theta$ and the vertical axis represents intensity $I$. The subset under consideration represents constant range, and it may be parameterized by a multiple of AoA $\theta$. As explained above, the regularization operation may include fitting 114.1 a smooth function of the parameter to the extracted intensities. Example smooth functions have been mentioned above and need not be repeated here.

Within the present embodiment, the one-dimensional subset of the range-angle plane 600 may be a range slice (constant range) parameterized by AoA $\theta$. This allows taking into account various heuristics or assumptions about known sources of clutter, as the implementer desires. The known sources of clutter may include omnidirectional sources (rain droplets, suspended dust etc.) and localized sources that occupy a bounded angular interval (e.g., localized vegetation). Figure 7 may be imagined to illustrate the presence of clutter in the form of reflections off the foliage of a tree located somewhat to the right of the main direction of incidence on the radar receiver 232. The signal mask 420 follows this nonuniform clutter contribution, which will thus be disregarded in the course of the later object detection step 116.

In the further step 115, a detection threshold 430 is derived from the signal mask 420. The detection threshold 430 is to be used for detecting objects in the range-angle data pertaining to that subset 510. More precisely, if the intensity of a range-angle bin exceeds the detection threshold 430, it is considered likely that a target located at that range and AoA is present in the scene 290. Similarly to the case of the range-Doppler data, the detection threshold 430 is in general not constant, but it rises above the noise floor only when and to the extent that a localized clutter sources is present.

An example of a feature representing a cluttered angular region is the gently rounded peak in the right-hand portion of the signal mask 420 in figure 7; a copy of this peak shape may be expected to reappear in the detection threshold 430. The portions outside the feature representing clutter are not necessarily inherited by the detection threshold 430, but they may be replaced with a preconfigured detection threshold value.

To derive the detection threshold 430 from the signal mask 420 while realizing these aims, one may add an offset $K$ to the signal mask 420, as seen in figure 7. As explained above, the offset $K$ is constant with respect to the parameter of the subset (here: AoA). It may optionally have a dependence on a spatial characteristic of the subsets 510 (e.g., range), or it can be uniform across all subsets 510. Considerations relating to these implementation choices have been discussed above and are equally applicable to the case of range-angle data.

The execution flow of the method 100 can then proceed to threshold-based object detection 116. In this step, the detection threshold 430 derived in step 115 is applied to the radar data pertaining to the subset 510 under consideration. Because the detection threshold 430 is derived in a manner that adapts to the radar data, the object detection 116 has a low probability of reporting clutter data as objects.

The further developments of the method 100 which were described above in the context of range-Doppler data are equally applicable to the embodiment addressing range-angle data.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

1. A method (100) of detecting objects in radar data, the method comprising:

   obtaining (no) radar data from a radar measurement of a scene (290), wherein the radar data includes intensities pertaining to a plurality of points in a range-Doppler plane (300) or a range-angle plane (600);
   parametrizing (112) a one-dimensional subset (510) of the range-Doppler plane or the range-angle plane, as the case may be, by one parameter;
   extracting (113), from the radar data pertaining to the subset, intensities (410) which are below a preconfigured clutter threshold ($C$);
   regularizing (114) the extracted intensities as a function of the parameter to obtain a signal mask (420);
   deriving (115) a detection threshold (430) from the signal mask; and
   performing object detection (116), wherein the detection threshold is applied to the radar data pertaining to the subset.

2. The method of claim 1, wherein deriving (115) the detection threshold includes adding an offset ($K$) to the signal mask, wherein the offset is constant with respect to the parameter.

3. The method of claim 2, wherein the offset has a preconfigured value.

4. The method of claim 2, wherein the offset is computed from the radar data pertaining to the subset.

5. The method of any of the preceding claims, wherein regularizing (114) the extracted intensities includes fitting (114.1) a smooth function of the parameter to the extracted intensities (410).

6. The method of claim 5, wherein the smooth function is defined by quadratic or cubic polynomial patches.

7. The method of any of the preceding claims, further comprising:

   estimating (111) a noise floor on the basis of the radar data,
   wherein the deriving of the detection threshold (430) includes assessing whether the noise floor substantially coincides with the signal mask and, if so, computing the detection threshold based on the noise floor.

8. The method of any of the preceding claims, further comprising repeating the parameterization (112), extraction (113), regularization (114), threshold derivation (115) and object detection (116) for at least one further one-dimensional subset of the range-Doppler plane or the range-angle plane.

9. The method of claim 8, further comprising:
   performing global object detection (118), including combining outputs of the object detection for two or more subsets and/or using a global detection threshold obtained by combining detection thresholds from two or more subsets.

10. The method of any of the preceding claims, wherein, in the case of the range-Doppler plane, the one-dimensional subset corresponds to a range slice parameterized by Doppler velocity.

11. The method of claim 10, wherein the regularization (114) is performed with a preference for the signal mask to be an even function.

12. The method of claim 11, wherein said even function is centered at zero Doppler velocity.

13. The method of any of claims 1 to 9, wherein, in the case of the range-angle plane, the one-dimensional subset corresponds to a range slice parameterized by angle of arrival.

14. A signal processing device (240) comprising processing circuitry (241) configured to detect objects in radar data by performing the method of any of the preceding claims.

15. A computer program (243) comprising instructions which, when the program is executed by a computer, cause the computer to carry out the method of any of claims 1 to 13.

**Amended claims in accordance with Rule 137(2) EPC.**

1. A method (100) of detecting objects in radar data, the method comprising:

   obtaining (110) radar data from a radar measurement of a scene (290), either by carrying out the radar measurement or by receiving the radar data from radar equipment (230) via a data interface (244), wherein the radar data includes intensities pertaining to a plurality of points in a range-Doppler plane (300) or a range-angle plane (600);
   parametrizing (112) a one-dimensional subset (510) of the range-Doppler plane or the range-angle plane by one parameter;
   extracting (113), from the radar data pertaining to the subset, intensities (410) which are below a preconfigured clutter threshold (C) on intensity;
   regularizing (114) the extracted intensities as a function of the parameter to obtain a signal mask (420);
   deriving (115) a detection threshold (430) from the signal mask; and
   performing object detection (116), wherein the detection threshold is applied to the radar data pertaining to the subset.

2. The method of claim 1, wherein deriving (115) the detection threshold includes adding an offset (K) to the signal mask, wherein the offset is constant with respect to the parameter.

3. The method of claim 2, wherein the offset has a preconfigured value.

4. The method of claim 2, wherein the offset is computed from the radar data pertaining to the subset.

5. The method of any of the preceding claims, wherein regularizing (114) the extracted intensities includes fitting (114.1) a smooth function of the parameter to the extracted intensities (410).

6. The method of claim 5, wherein the smooth function is defined by quadratic or cubic polynomial patches.

7. The method of any of the preceding claims, further comprising:

   estimating (111) a noise floor on the basis of the radar data,
   wherein the deriving of the detection threshold (430) includes assessing whether the noise floor substantially coincides with the signal mask and, if so, computing the detection threshold based on the noise floor.

8. The method of any of the preceding claims, further comprising repeating the parameterization (112), extraction (113), regularization (114), threshold derivation (115) and object detection (116) for at least one further one-dimensional subset of the range-Doppler plane or the range-angle plane.

9. The method of claim 8, further comprising:
   performing global object detection (118), including combining outputs of the object detection for two or more subsets and/or using a global detection threshold obtained by combining detection thresholds from two or more subsets.

10. The method of any of the preceding claims, wherein, in the case of the range-Doppler plane, the one-dimensional subset corresponds to a range slice parameterized by Doppler velocity.

11. The method of claim 10, wherein the regularization (114) is performed with a preference for the signal mask to be an even function.

12. The method of claim 11, wherein said even function is centered at zero Doppler velocity.

13. The method of any of claims 1 to 9, wherein, in the case of the range-angle plane, the one-dimensional subset corresponds to a range slice parameterized by angle of arrival.

14. A signal processing device (240) comprising processing circuitry (241) configured to detect objects in radar data by performing the method of any of the preceding claims.

15. A computer program (243) comprising instructions which, when the program is executed by a computer, cause the computer to carry out the method of any of claims 1 to 13.

*100*

110 — Obtain radar data

111 — Estimate nois floor

112 — Parametrize subset

113 — Extract intensities below clutter threshold

114 — Regularize into signal mask

114.1 — Fit smooth function

115 — Derive detection threshold

116 — Object detection

117 — All subsets processed?   N

118 — Global object detection   Y

*Fig. 1*

EP 4 729 979 A1

Fig. 2

Fig. 3

Fig. 4

*Fig. 5A*

*Fig. 5B*

*Fig. 5C*

**Fig. 6**

**Fig. 7**

Europäisches
Patentamt

European
Patent Office

Office européen
des brevets

# EUROPEAN SEARCH REPORT

**Application Number**

EP 24 20 7722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/060650 A1 (TEXAS INSTRUMENTS INC [US]) 24 March 2022 (2022-03-24) * figure 6 * * paragraph [0031] * * paragraph [0036] - paragraph [0043] * ----- | 1-15 | INV. G01S7/292 G01S7/35 G01S7/41 G01S13/42 |
| A | EP 3 617 740 A1 (INFINEON TECHNOLOGIES AG [DE]) 4 March 2020 (2020-03-04) * figure 5 * * paragraph [0037] - paragraph [0041] * ----- | 1-15 | G01S13/58 G01S13/931 G01S13/524 |
| A | MatLAB: "movmean - MATLAB Function", , 3 March 2016 (2016-03-03), XP093248010, Retrieved from the Internet: URL:https://de.mathworks.com/help/matlab/ref/movmean.html [retrieved on 2025-02-07] * the whole document * ----- | 6 | |

**TECHNICAL FIELDS SEARCHED (IPC)**

G01S

The present search report has been drawn up for all claims

| Place of search | Date of completion of the search | Examiner |
|---|---|---|
| Munich | 7 February 2025 | Töpfer, Nils-Peter |

EPO FORM 1503 03.82 (P04C01)

## ANNEX TO THE EUROPEAN SEARCH REPORT
## ON EUROPEAN PATENT APPLICATION NO.

EP 24 20 7722

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2025

| Patent document cited in search report | | Publication date | Patent family member(s) | | Publication date |
|---|---|---|---|---|---|
| WO 2022060650 | A1 | 24-03-2022 | CN | 116113843 A | 12-05-2023 |
| | | | US | 2022082681 A1 | 17-03-2022 |
| | | | US | 2024134034 A1 | 25-04-2024 |
| | | | WO | 2022060650 A1 | 24-03-2022 |
| EP 3617740 | A1 | 04-03-2020 | CN | 110865349 A | 06-03-2020 |
| | | | EP | 3617740 A1 | 04-03-2020 |
| | | | US | 2020072958 A1 | 05-03-2020 |

EPO FORM P0459

For more details about this annex : see Official Journal of the European Patent Office, No. 12/82

## REFERENCES CITED IN THE DESCRIPTION

**Patent documents cited in the description**

- US 10627483 B2